# EUROPEAN PATENT APPLICATION

(11) **EP 3 809 014 A1**
(43) Date of publication of application: **21.04.2021**
(21) Application number: 20201284.5
(22) Date of filing: 12.10.2020
(51) Int. Cl.: F16H 27/04, F16H 35/02

(54) **METHOD AND DEVICE FOR REDUCING THE DRIVING TORQUE OF MACHINE MECHANISMS WITH NON-CONSTANT TRANSMISSION**

(30) Priority: 15.10.2019 CZ 20190064
(71) Applicant: VÚTS, a.s., Liberec XI - Ruzodol I 460 01 Liberec (CZ)
(72) Inventor: Jirasko, Petr, Liberec XXX - Vratislavice nad Nisou 463 11 Liberec (CZ)
(74) Representative: Musil, Dobroslav

(57) **Abstract**

The invention relates to a method for reducing the input driving torque of machine working mechanisms (1) with non-constant transmission, especially for handling equipment and production machines, in which the working mechanism (1) is driven by a uniform rotary movement with a predefined driving torque (M1) having a course dependent on the angle (ψ) of rotation of the input element of the working mechanism (1). A predefined driving torque (M2) is applied to the input element of the working mechanism (1), whereby the course of the predefined driving torque (M2) is mirror-inverted with respect to the predefined driving torque (M1) depending on the angle (ψ) of rotation of the input element of the working mechanism (1).

In addition, the invention relates to a device for reducing the input driving torque of machine working mechanisms (1) with non-constant transmission, especially for handling equipment and production machines, which comprise an input element coupled to a shaft of a uniform rotary drive. The input element of the working mechanism (1) is connected by a rigid element to an input element of a balancing mechanism (2), whereby the balancing mechanism (2) has a predefined driving torque (M2), whose course, depending on the angle (ψ) of rotation of the input element of the balancing mechanism (2), is mirror-inverted with respect to the predefined driving torque (M1), depending on the angle (ψ) of rotation of the input element of the working mechanism (1).

## Description

### Technical field

The invention relates to a method for reducing the input driving torque of machine working mechanisms with non-constant transmission, especially in handling equipment and production machines, in which the working mechanism is driven by a uniform rotary motion with a predefined driving torque having a course depending on the angle of rotation of an input element of the working mechanism.

In addition, the invention relates to a device for reducing the input driving torque of machine working mechanisms with non-constant transmission, especially in handling equipment and production machines, which comprise an input element coupled to a shaft of a uniform rotary drive.

### Background art

The motion of working members of production and handling machines is determined by the desired technological function. This working motion is ensured by mechanisms, or, more precisely, by a kinematic chain of mechanisms with one degree of freedom. In most cases, this involves transformation of input rotary (drive) motion with constant angular velocity into non-uniform rotary or sliding motion of the working member at the output. This transformation is generally accomplished by cam, joint or cam-joint mechanisms, whether planar or spatial. If needed, these mechanisms may be supplemented by mechanisms with constant transmission, such as toothed wheels, belt drives or other types of transmission mechanisms with constant transmission.

The kinematic chain of mechanisms for ensuring the working motion is thus composed of members which have a rotary, sliding and general motion. The motion of these members, which are material bodies, results in dynamic inertial forces which on the one hand cause force reactions acting on the machine frame and on the other hand cause non-uniformities of the driving torque. In order to restrict the force reactions acting on the machine frame, the members of the kinematic chain are balanced, e.g. according to CZ 284 099, CZ 301 095 and others, which, however, increases the weight of these members, which in turn leads to increasing the value of the required driving torque at the input of the kinematic chain of mechanisms for ensuring the working movement.

The total driving torque at the input of the kinematic chain is in balance with the force effects of the passive resistances, the external technological forces acting on the working output member and with the dynamic inertial forces of all the members of the kinematic chain.

The drive of the kinematic chain, i.e., at the input of the kinematic chain, is required to have a constant speed, therefore electric motors are used as the drive. The electric motors are appropriately dimensioned in terms of power, i.e. in terms of speed and torque, with respect to the maximum values of the driving torque as well as the effective values of the driving torque. Due to the negative influence of the electric drive motor by the driven kinematic chain, electric motors with a power that is oversized, sometimes quite considerably, are chosen as electric drive motors.

To reduce the requirements for the maximum values of the driving torque of the electric drive motor, it is possible to use, for example, flywheels at the input, which to some extent compensate for the peak values of the driving torque. The energy required to reduce the peak values of the torque is taken from the kinetic energy of the flywheel, which, however, results in a reduction in the rotation speed of the flywheel, resulting in further non-uniformities of the operation of the electric drive motor and of the driven kinematic chain. Different principles of the driving torque compensation using the mirror torque are described, for example, in the German norm for the dynamics of cam mechanisms VDI 2149 (Blatt1), Getriebedynamik Starrkotper-Mechanismen. However, this relates to combinations of mechanisms with non-circular toothed wheels which have their geometric limitations.

In the current state of the art, it is not possible to effectively reduce that part of the required input driving torque at the input of the kinematic chain with constant rotation, the need for which is caused by the action of the dynamic inertial forces of the individual members of the kinematic chain.

The object of the invention is therefore to eliminate or at least substantially reduce the drawbacks of the background art, particularly to enable the reduction of the required input driving torque at the input of a kinematic chain with constant rotation.

### Principle of the invention

The object of the invention is achieved by a method for reducing the driving torque of machine mechanisms with non-constant transmission, especially in handling equipment and production machines, whose principle consists in that a predefined driving torque is applied to an input element of a working mechanism, whereby the course of the driving torque is mirror-inverted with respect to the predefined driving torque depending on the angle of rotation of the input element of the working mechanism.

The principle of a device for reducing the driving torque of machine mechanisms with non-constant transmission, especially in handling equipment and production machines, whose principle consists in that an input element of a working mechanism is connected by a rigid element to an input element of a balancing mechanism, the balancing mechanism having a predefined driving torque whose course, depending on the angle of rotation of the input element of the balancing mechanism, is mirror-inverted with respect to the predefined driving torque, depending on the angle of rotation of the input element of the working mechanism.

The invention consists in eliminating that part of the total required driving torque at the input of the working kinematic chain which would otherwise be needed to overcome the dynamic inertial forces of the members of the kinematic chain with non-uniform rotary, sliding and general motion. If we consider a working kinematic chain with one degree of freedom without the influence of passive resistances, or without friction and without external technological force acting on the output member, then the function of the course of the driving torque depending on the input rotation of a drive shaft is a dynamic solution of the task defining the motion of the kinematic chain at a constant angular velocity of the input member.

The required driving torque of the working kinematic chain is reduced when a reduction torque is applied to the input member of the driven kinematic chain. The time course of the reduction torque, depending on the input rotation of the input shaft, is mirror-inverted with respect to the actual time course of the driving torque of the driven kinematic chain. Both the input torques, i.e. both the reduction torque and the driving torque, will have the same time course in their absolute magnitude, only with opposite +/- signs.

The reduction torque may be derived, for example, as the driving torque of a cam mechanism with a non-periodic working displacement without rest intervals, which is typically a type of mechanism where the output member performs a non-periodic motion, often referred to as a stepwise motion. This rotary stepwise motion can be imagined, for example, as a superposition of constant rotation with a periodic motion, where the resulting motion is a non-uniform circular motion, for example in a stepwise cam mechanism. This non-uniform circular motion of the output member can be designed in such a manner that the time course of the driving torque of the stepwise cam mechanism is mirror-inverted to the balanced driving torque of the driven kinematic chain with a periodic working displacement.

The reduction torque can also be represented by the driving torque of a cam mechanism with a periodic working displacement, which is a type of mechanism where the output member performs a periodic motion. This periodic motion can be imagined, for example, as an oscillatory motion of a rocker of a basic cam mechanism of a cam with a rocker arm and a pulley. The driving torque of the periodic cam mechanism can be designed in such a manner that it is mirror-inverted to the balanced driving torque of the driven working kinematic chain with a non-periodic or stepwise working displacement without rest intervals.

In principle, we distinguish between two mechanical systems, where one is with a periodic working displacement and the other is with a non-periodic or stepwise displacement. The displacement is defined as the dependence of the position of the output member of the driven mechanism on the position, or rotation, of the input member of the driven mechanism driven by a drive with constant rotation. In both cases, these are mechanisms with non-constant transmission between the input and the output.

The invention is therefore based on the fact that the instantaneous value of the driving torque of the working kinematic chain, i.e. the value of the driving torque required to drive the working kinematic chain is reduced by the negative value of the reduction driving torque of the balancing cam mechanism.

This creates a mechanical system consisting of two parts, namely a part with a periodic displacement and a part with a stepwise displacement. The two parts are interconnected by a drive shaft with constant rotation, on which in a given position both torques cancel each other out in that part of the total driving torque by which the drive responds to the dynamic inertial forces of the driven members of the kinematic chain, i.e., mechanisms with non-uniform rotary motion, with sliding motion and general motion. The value of one torque is positive, while the value of the other torque is negative, and both values are the same in their absolute magnitude.

If the thus defined mechanical systems are connected via input shafts with the required constant rotation, the driving torques cancel each other out. This is due to the fact that in the case of a requirement for an instantaneous positive driving torque of the driven kinematic chain, a requirement arises for the same instantaneous, but negative, driving torque of the reduction cam mechanism and vice versa. In other words, the requirement to accelerate the driven kinematic chain is spontaneously compensated by braking the reducing cam mechanism.

Thus, there will be a cooperation of two mechanical systems, wherein the movement of the working member of one system is periodic and the movement of the working member of the other system is non-periodic, or stepwise. In this case it is quite unimportant which of the two mechanical systems is a working system and which is a reducing system. When two such mechanical systems cooperate with one another, kinetic energy is exchanged between the two mechanical systems by means of symmetrical mirror-inverted driving torques.

It is also possible to realize the cooperation of the two mechanical systems, when the movement of the working member of one system is non-periodic and the movement of the working member of the other system is also non-periodic, or stepwise. In this case, when the working displacement of the driven kinematic chain has rest intervals, then the displacement of the reduction system in this section has a constant first derivative, i.e. the working member moves at a constant angular velocity. Again, it does not matter which of the two mechanical systems is working and which is reducing. When the two mechanical systems cooperate, kinetic energy is exchanged between the two mechanical systems by means of symmetrical mirror-inverted driving torques.

The required driving torque of the drive of the two mechanic systems, i.e., the working system and the reduction system, is then zero if the passive resistances and external working load are neglected.

If such a mechanic system is in motion with constant input rotation and is not subjected to external force effects, then only energy is required to move such a system for the compensation for energy losses due to the passive resistances in the system and the system maintains constant value of kinetic energy. The kinetic energy accumulates in the system during the start-up of the system. The system described above comprising a reducing mechanism and a working mechanism can then be implemented with non-periodic or stepwise displacement, and can be arranged with a radial, axial or globoid cam or with a double cam.

### Description of the drawings

The invention is schematically represented in the drawings, wherein:
- Fig. 1a shows a kinematic diagram of a double-cam mechanism with a double rocker 11,
- Fig. 1b represents periodic displacement φ1 = φ1(ψ) of the rotation of the working member φ1 depending on the rotation of the cam ψ,
- Fig. 2a shows a planar kinematic chain of a compound mechanism with one degree of freedom, the structure of which consists of a basic cam mechanism of a radial cam with a rocker arm and a pulley, a four-joint mechanism and a link mechanism,
- Fig. 2b shows periodic displacement w = w(ψ) of the displacement of the working member w depending on the rotation of the cam ψ,
- Fig. 3a shows a double cam with a rotary carousel which has 8 rollers,
- Fig. 3b represents non-periodic, or stepwise, displacement φ = φ(ψ) with rest period of the rotation of the working member φ depending on the rotation of the cam ψ,
- Fig. 4a is a double cam with a rotary carousel, which has 8 rollers,
- Fig. 4b represents non-periodic, or stepwise, displacement φ2 = φ2(ψ) without rest period of the rotation of the working member φ2 depending on the rotation of the cam ψ,
- Fig. 5a shows a mechanic system of two mechanisms with one degree of freedom interconnected via a drive shaft with constant rotation, wherein one system includes a radial double cam and a rotary carousel with periodic displacement φ1 = φ1 (ψ) and moment of inertia J1, the other system includes a radial double cam and a rotary carousel with non-periodic, or stepwise, displacement φ2 = φ2 (ψ) with moment of inertia J2,
- Fig. 5b shows the course of driving torques M1 and M2, which are mutually symmetrical along the axis ψ, or mirror-symmetric, in its values of the driving torques, where M2 = - M1.

### Examples of embodiment

The present invention will be described on the basis of exemplary embodiments of a device for reducing the driving torque of machine mechanisms with non-constant transmission and a method of their operation, from which follows a specific method for reducing the driving torque of machine mechanisms with non-constant transmission.

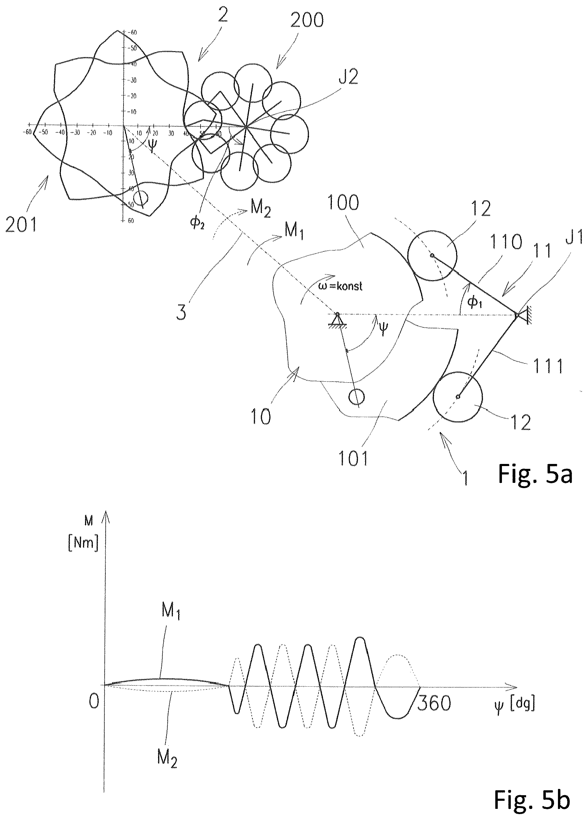

The basic means of construction of the device for reducing the driving torque of machine mechanisms with non-constant transmission according to the invention are two rigidly non-deformably interconnected, specifically formed and mutually adjusted, mechanisms **1**, **2** with one degree of freedom, namely a working mechanism and a balancing mechanism **2** of Fig. 5a.

The working mechanism **1** is a mechanism which is to ensure the performance of the required working function, or the required displacement function **φ1**, which is needed for the correct operation of an unillustrated device which is driven by the working mechanism **1**. The balancing mechanism **2** is a mechanism which eliminates a part of the total required driving torque **M1** at the input of the working mechanism **1**, which would otherwise be needed to overcome the dynamic inertial forces of the members of the working mechanism **1** with non-uniform rotational, sliding and general motion.

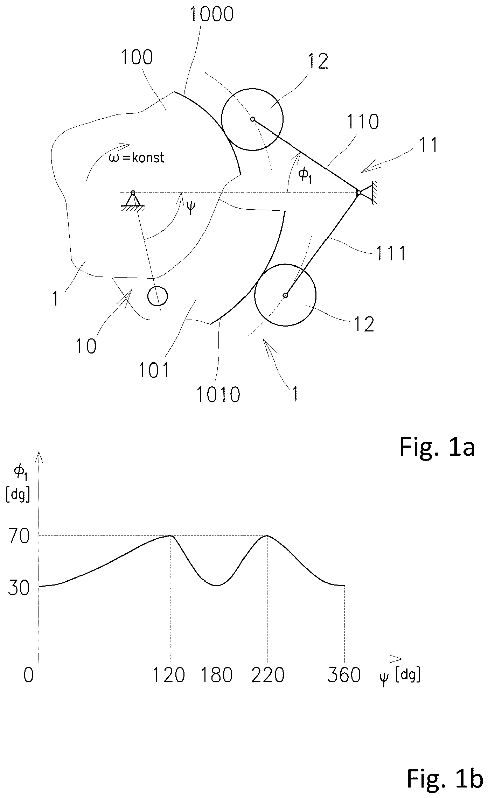

Fig. 1a shows an embodiment of a working mechanism **1** in the form of a basic cam mechanism comprising a radial double cam **10** which is coupled to a two-arm rocker **11** with pulleys **12,** which ensure the contact of the respective arm **110**, **111** of the rocker **11** with a work surface **1000**, **1010** of the respective cam **100**, **101** of the double cam **10**. The working mechanism has working periodic displacement **φ1**=φ1(ψ) with rest intervals or without rest intervals, as shown in Fig. 1b.

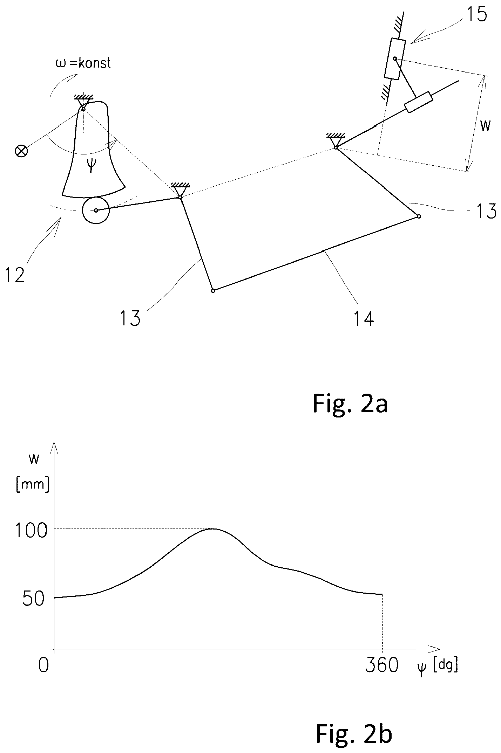

In another example of embodiment of the invention, the working mechanism is formed as a kinematic chain, basically of any kind. This kinematic chain comprises a system of planar or spatial mechanisms or it comprises a combination of planar and spatial mechanisms. This machine mechanism **1** also has one degree of freedom and has working periodic dependence with rest intervals or without rest intervals. An example of such a working mechanism **1** in the form of a kinematic chain is the mechanism shown in Fig. 2a, which at the input comprises a basic cam mechanism **12**, which is via a pair of rockers **13**, which are mutually connected by a connecting rod **14**, coupled to a reversibly sliding node **15,** which is an output element of this kinematic chain constituting a working mechanism and which performs a reciprocating sliding movement within the range of the length **W** in Fig. 2a.

In another unillustrated exemplary embodiment, the working mechanism **1** in the form of a kinematic chain according to the embodiment in Fig. 2a is configured in such a manner that at the input it comprises only a connecting rod **14** which is coupled by a "right-handed" rocker **13**, which is coupled to a reversibly sliding node **15**, which is an output element of this kinematic chain constituting the working mechanism **1** and which performs a reciprocating sliding movement within the range of length **W**, as follows from Fig. 2a.

The working mechanism **1** requires its drive shaft **3** to meet the condition of constant rotation, see, for example, Fig. 5a, connected to a rotary drive with constant velocity (not shown), has a predefined driving torque **M1**, whose course, depending on the angle ψ of rotation of the input element of the working mechanism **1,** i.e. here the twin **10**, is shown by way of example in Fig. 5b.

An input element of the working mechanism **1**, i.e., a double cam **10**, is connected by a rigid non-deformable joint, e.g., by a rigid shaft, connected to an input element of the balancing mechanism **2**, whose displacement **φ2**=φ2(ψ) is such that the driving torque **M2** of the balancing mechanism **2** is mirror-inverted with respect to the predefined driving torque **M1** of the working mechanism **1**, or that the driving torque **M2** of the balancing mechanism **2** is symmetric along the axis of the independent variable **ψ**, as is shown, for example, in Fig. 5b. Thus, a situation arises when the two torques **M1 and M2** cancel each other out, so that in the case of a positive driving torque **M1** of the working mechanism **1**, when in the exemplary embodiments in Figs. 1a and 2a the rocker **11** and **13** accelerates, the value of the driving torque **M2** of the balancing mechanism **2** is equal in magnitude and opposite in polarity, which consequently causes a deceleration of the input member of the balancing mechanism **2.** The same applies also vice versa for each position of rotation **ψ** of the drive shaft **3** in Fig. 5a, which here represents the aforementioned rigid non-deformable joint of the input element of the working mechanism **1** with the input element of the balancing mechanism **2.** Thus, kinetic energy flows over the drive shaft **3**, which is here the output member of a rotary drive (not shown) with a constant angular velocity ω=constant, between the working mechanism **1** and the balancing mechanism **2** and the entire system of both mechanisms **1**, **2** interconnected by the shaft **3** maintains a constant value of its kinetic energy provided that passive resistances and external loads are excluded.

In the mechanical system shown as an exemplary embodiment in Fig. 5a, the functions of the working mechanism **1** and of the balancing mechanism **2** can be interchanged, and so the balancing mechanism **2** with non-periodic displacement φ2=φ2(ψ) can function as a working mechanism **1** and, vice versa, the working mechanism **1** with periodic displacement **φ1**=φ1(ψ) with rest intervals or without rest intervals becomes a balancing mechanism **2.** In the case of the displacement section **φ1**=φ1(ψ) with the rest interval of the working mechanism **1**, the corresponding displacement section φ2=φ2(ψ) of the balancing mechanism **2** has a constant angular velocity, or the first derivative of the displacement **φ2** in the corresponding section is equal to one.

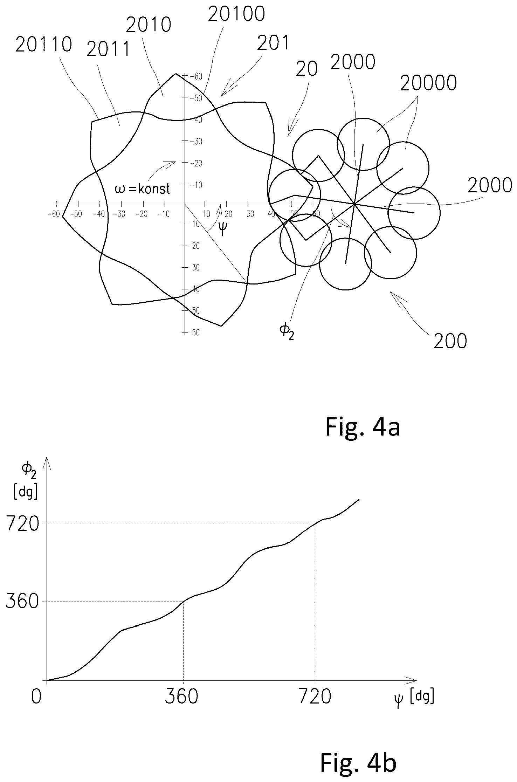

The aforementioned conditions imposed on the balancing mechanism 2 can be met by the balancing mechanism **2** shown, for example, in Figs. 4a and 5a in the form of a double cam **20** with a rotary carousel **200** associated with a double cam **201**, where this mechanism **20** has non-periodic, or stepwise displacement **φ2**=φ2(ψ) without rest intervals, which is shown in Fig. 4b and whose driving torque **M2** is mirror-inverted image of the predefined driving torque **M1** of the working mechanism **1**. Each cam **2010, 2011** of the double cam **201** is provided with a circumferential work surface **20100, 20110,** which determines the movement of the rockers **2000** of the carousel **200** provided with pulleys **20000,** where each cam **2010**, **2011** of the double cam **201** is associated with one set of rockers **2000** with the pulleys **20000.**

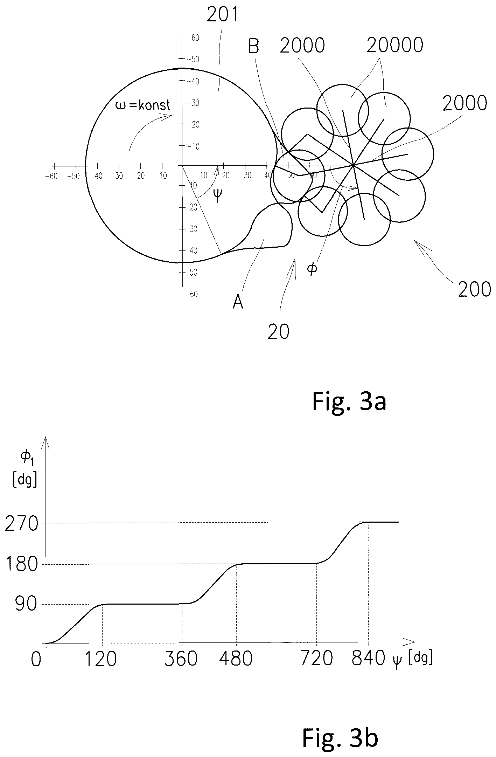

Fig. 3 shows the basic principle of the double cam **20** with the rotary carousel **200,** which is associated with the double cam **201.** This solution is used, for example, in stepwise gearboxes. The carousel **200** is provided with rockers **2000**, pulleys **20000,** which are in contact with the cam work surfaces **20100**, **20110** of the respective cam **2010**, **2011**. The double cam **201** rotates at a constant angular velocity **ω** and a pair of mutually defined teeth **A and B** in collaboration with the pulleys **20000** of the carousel **201** ensures the stepwise rotary motion of the carousel **201.**

The embodiment of a two-cam mechanism **20** shown in Figs. 4a and 5a has adequately formed cam work surfaces **20100, 20110** of each of the cams **2010**, **2011**, to which an adequate number of rockers **2000** with pulleys **20000** are assigned.

### Industrial applicability

The invention can be used particularly for reducing the driving torque required to operate machinery and equipment.

## Claims

1. A method for reducing the input driving torque of machine working mechanisms (1) with non-constant transmission, especially for handling equipment and production machines, in which the working mechanism (1) is driven by uniform rotary movement with a predefined driving torque (M1) having a course depending on the angle (ψ) of rotation of the input element of the working mechanism (1), **characterized in that** a predefined driving torque (M2) is applied to the input element of the working mechanism (1), whereby the course of the predefined driving torque (M2) is mirror-inverted with respect to the predefined driving torque (M1) depending on the angle (ψ) of rotation of the input element of the working mechanism (1).

2. The method according to claim 1, **characterized in that** the input element of the working mechanism (1) is connected to an input element of a balancing mechanism (2), whose predefined driving torque (M2) depending on the angle (ψ) of rotation of the input element of the balancing mechanism (2) is mirror-inverted with respect to the predefined driving torque (M1) depending on the angle (ψ) of rotation of the input element of the working mechanism (1).

3. A device for reducing the input driving torque of machine working mechanisms (1) with non-constant transmission, especially for handling equipment and production machines, which comprise an input element coupled to a shaft of a uniform rotary drive, **characterized in that** the input element of the working mechanism (1) is connected by a rigid element to an input element of a balancing mechanism (2), whereby the balancing mechanism (2) has a predefined driving torque (M2), whose course, depending on the angle (ψ) of rotation of the input element of the balancing mechanism (2), is mirror-inverted with respect to the predefined driving torque (M1), depending on the angle (ψ) of rotation of the input element of the working mechanism (1).

4. The device according to claim 3, **characterized in that** the balancing mechanism (2) comprises a cam mechanism with non-periodic displacement without rest intervals.

5. The device according to claim 4, **characterized in that** the cam mechanism with non-periodic displacement without rest intervals comprises a radial cam or axial cam or globoid cam or a double cam (201).
